# FASCICULE DE BREVET EUROPEEN

(11) **EP 0 740 955 B1**
(45) Date de publication et mention de la délivrance du brevet: **03.12.2003**
(21) Numéro de dépôt: 96400869.2
(22) Date de dépôt: 24.04.1996
(51) Int. Cl.: B01J 8/02, B01J 8/12, B01J 8/00, C10G 35/12

(54) **Enceintes avec soutirage amélioré des particules solides**
Behälter mit verbessertem Abzug von Feststoffpartikeln
Vessel with improved discharge of solid particulate matter

(30) Priorité: 02.05.1995 FR 9505324
(43) Date de publication de la demande: 06.11.1996
(73) Titulaire: Institut Français du Pétrole, 92502 Rueil-Malmaison (FR)
(72) Inventeur: Euzen, Jean-Paul, 69570 Dardilly (FR); Vuillemot, Daniel, 69390 Millery (FR); Pontier, Renaud, 38200 Vienne (FR)

(56) Documents cités:
- BE-A- 768 235
- DE-U- 9 014 347
- FR-A- 1 130 249
- FR-A- 1 180 648
- FR-A- 2 427 378
- US-A- 4 769 219
- CHEMICAL ENGINEERING PROGRESS, vol. 86, no. 2, Février 1990, NEW YORK US, pages 23-31, XP000141935 P. TRAMBOUZE: "Reactor Scaleup Methodology"

## Description

La présente invention concerne une enceinte dans laquelle se déroule une réaction chimique en présence d'un catalyseur et comportant au moins un lit de particules solides catalytiques dont l'écoulement vers le (les) moyen(s) de soutirage est facilité par la présence d'une succession d'élévations et de creux formant un plissage.

Le document US-4,769,219 décrit un procédé et une enceinte pour la régénération de catalyseur. Le lit de catalyseur formé est supporté à la fois par la grille conique formant le fond de l'enceinte dans laquelle est le lit catalytique et par son prolongement i.e., le conduit ou moyen de soutirage lui-même muni d'une vanne.
Le catalyseur est maintenu dans l'enceinte en lit fluidisé, pour la réaction.
Le catalyseur est traité en batch et est extrait en totalité et de façon discontinu.

Il est indiqué que la grille formant le fond est percée régulièrement par des ouvertures transversales. Sur ces ouvertures sont disposées des grilles bombées vers le haut et qui présentent des trous de diamètre plus petit que le diamètre moyen des particules de catalyseurs.

Par les élévations ainsi formées, les particules fines de catalyseur (particules cassées ou résultant de l'attrition) sont extraites et collectées dans le fond de l'enceinte d'où elles sortent par une ouverture séparée.

La présente invention concerne avantageusement les réacteurs contenant des particules catalytiques, et celles notamment dans lesquelles le catalyseur circule sous forme de lit mobile, en particulier dans le cas de lit mobile de forme annulaire. Ces cas se rencontrent notamment dans les procédés de réformage catalytique.

Dans les unités en lit mobile dans lesquelles la circulation du solide, catalytique ou non, de forme sphérique ou non, est réalisée en lit dense s'écoulant verticalement sous l'effet de la pesanteur, les parois qui limitent la zone granulaire comportent le plus souvent 2 grilles cylindriques de diamètre différent. Le fluide, en phase liquide ou plus souvent gazeuse, ou éventuellement les fluides (gaz et liquide, ou liquide et autre liquide non miscible) traverse le lit granulaire (et dans ce cas annulaire) en écoulement croisé, c'est-à-dire en écoulement radial, de l'extérieur vers l'intérieur, ou inversement de l'intérieur vers l'extérieur. Après avoir traversé la grille cylindrique d'entrée, le fluide traverse donc le lit, puis sort de l'espace annulaire contenant le milieu granulaire en passant à travers une seconde grille, la grille de sortie, concentrique à la grille d'entrée.

Les particules solides catalytiques, sphériques ou non, sont introduites à la partie supérieure du lit mobile, puis descendent dans l'espace limité par les parois ou les grilles latérales, puis sont soutirées à la partie inférieure du lit mobile.

L'écoulement régulier des particules à la base d'un réacteur en lit mobile est un problème important difficile à régler.
Il est en effet important que les particules qui traversent le réacteur en sortent toutes après un temps de séjour sensiblement identique, sans retard ou sans avance par rapport aux autres, de manière à ce que leur évolution reste analogue et que leur utilisation soit optimale pour le fonctionnement de l'unité. Or, il est difficile de soutirer toutes les particules après le même temps de séjour parce que les trajectoires des particules sont différentes les unes des autres, en particulier au fond du lit mobile. En effet, la section transversale de passage du catalyseur change brutalement entre la zone qui correspond à l'espace annulaire et la zone qui correspond au total des conduits de soutirage. Ce changement très rapide de section provoque des mouvements relatifs importants entre les particules et par la suite une large distribution des vitesses moyennes d'écoulement de ces particules.
A la base du réacteur, on trouve des zones mortes dans lesquelles les particules ne circulent que très peu ou même pas du tout et qui sont donc d'une part pratiquement inutiles pour la fonction catalytique et d'autre part nuisibles vis-à-vis d'un écoulement régulier des autres particules puisqu'elles leur offrent une surface de contact et donc de frottement assez irrégulière, et de toute façon bien moins favorable à l'écoulement qu'une paroi lisse.

L'objectif de l'invention est de modifier en direction et en intensité les contraintes qui s'exercent sur les particules à la base du lit pour faciliter et régulariser les mouvements relatifs entre ces particules.

Pour résoudre ce problème de soutirage des particules catalytiques, l'invention propose une structure particulière du fond du lit contenu dans l'enceinte.
Plus précisément, l'invention a pour objet une enceinte dans laquelle s'effectue une réaction chimique en présence d'un catalyseur et comportant au moins un lit de particules solides catalytiques délimité pour son écoulement par au moins une paroi et un fond, ladite enceinte comportant dans son toit au moins une ouverture pour introduire les particules solides de catalyseur, et dans son fond au moins un moyen de soutirage par gravité desdites particules, ladite enceinte comportant également sur ledit fond au contact des particules une succession d'élévations et de creux formant un plissage, les élévations et creux étant orientés vers le (les) moyen(s) de soutirage dépourvu(s) de moyen d'obturation de façon à permettre, à la base, un écoulement descendant régulier permanent des particules en lit mobile.

L'invention sera mieux comprise par référence aux figures suivantes :
- figure 1 : enceinte avec fond plissé et moyen de soutirage
- figure 2 : demi-vue de dessus du fond de la figure 1
- figure 2A et 2B : coupes transversales des facettes du fond plissé
- figure 3 : demi-vue de dessus du fond d'une enceinte comportant 2 parois cylindriques délimitant le lit
- figure 4 : réacteur à lit mobile
- figure 4A, 4B et 4C : modes de réalisation dans lesquels le lit est traversé radialement par un fluide
- figure 5 : cloisonnement du lit en secteurs
- figure 6 : réacteur parallélépipédique
- figures 7 et 8 : 2 modes de réalisation d'un fond de lit dans une enceinte parallélépipédique.

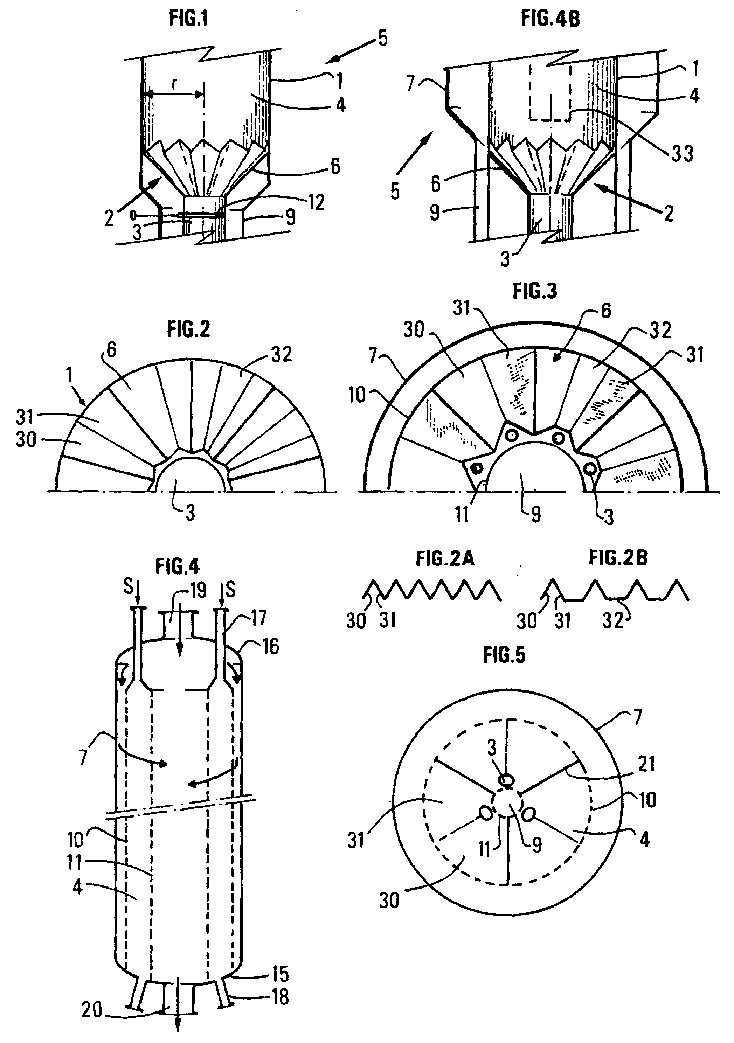

Dans la figure 1, il a été schématisé une paroi cylindrique (1) délimitant un lit (4) de particules solides, et qui est aussi la paroi de l'enceinte (5). Le lit comporte un fond (2) défini ici par une paroi (6) de forme conique débouchant au sommet du cône dans un moyen de soutirage (3) unique ici, et placé sur l'axe du lit.
La paroi (6) est munie sur au moins sa face interne au contact des particules, d'une succession d'élévations et de creux formant un plissage. Il est clair sur la figure 1 que les élévations et creux présentent une direction (ou une "pliure") orientée vers le moyen de soutirage (3) et de plus inclinée par rapport à l'horizontale, pour permettre l'écoulement gravitaire dirigé des particules.
Le moyen (3) de soutirage est ici constitué d'un tube cylindrique de même axe que la paroi (1).

La figure 2 est une demi-vue de dessus de la figure 1, mais les repères (12 et 9) de l'enceinte ont été supprimées pour plus de clarté, des explications concernant ces repères seront données ultérieurement.

Dans toutes les variantes de réalisation ici présentées, et de façon générale dans l'invention, la succession d'élévations et de creux résulte de l'assemblage de facettes carrées, rectangulaires, trapézoïdales ou sensiblement trapézoïdales, ou en forme de parallélogramme (voir figures 2 et 3) formant alors des arêtes.

Dans le cas des facettes (30, 31) de forme sensiblement trapézoïdales ou trapézoïdales utilisées dans le cas des lits de section annulaire (ou circulaire), elles présentent comme indiqué sur les figures 3 et 2 :
- une petite base proche du (des) moyen(s) de soutirage (3) près du collecteur central (9) ou plus généralement de l'axe ou du plan de symétrie, sensiblement horizontale et de forme à peu près rectiligne ;
- une grande base proche de la périphérie du lit, et par exemple dans la figure 3, de la grille externe (10) à la périphérie du lit, de forme elliptique ou à peu près rectiligne, se raccordant à la grille externe, et inclinée par rapport à l'horizontale ;
- un côté, allant de la grille externe vers la grille interne sur la figure 3, en reliant l'extrémité supérieure de la grande base décrite ci-dessus et l'extrémité la plus centrale de la petite base ;
- un côté, allant de la grille externe vers la grille interne (11) sur la figure 3, en reliant l'extrémité inférieure de la grande base décrite ci-dessus, et l'extrémité la moins centrale de la petite base.

L'ensemble décrit présente donc une succession de facettes d'une part inclinées vers le moyen de soutirage du solide ou vers le collecteur central et d'autre part orientées alternativement vers l'avant (trait plein sur les figures) ou vers l'arrière (trait fin sur les figures) d'un sens de rotation pris comme repère autour de l'axe du réacteur (de l'enceinte ou du lit).
Une coupe transversale des facettes (30, 31) est donnée figure 2A. L' arête formées par deux facettes adjacentes, qui est en élévation, peut demeurer vive ou être tronquée légèrement ou arrondie, mais sans jamais arriver à une surface importante aplanie qui créerait une zone de stationnement des particules nuisible à leur écoulement, et en particulier dans le cas d'un lit mobile.

En variante, on propose de disposer une série de petites facettes supplémentaires, dites médianes, de forme trapézoïdale (repère 32) placées entre les facettes décrites plus haut (repère 30 et 31) au niveau de leur intersection transversale, les deux bases étant donc sensiblement horizontales. Ces facettes aplanissent ainsi les creux précédemment formés par la série des facettes repérées 30 et 31.
Il est donc disposé au niveau d'au moins un creux au moins une facette dite médiane.
Une coupe transversale est donnée figure 2B.
La matière et la surface de ces facettes sont bien évidemment choisies pour diminuer les forces de frottement et donc faciliter l'écoulement des particules.

Changer la forme du fond du lit pour la transformer en une succession d'élévations et de creux convergeant tous vers l'axe de symétrie du lit et/ou les(s) moyen(s) de soutirage provoque plusieurs effets :
. certaines particules sont mises en contact beaucoup plus tôt que dans la disposition classique, avec une paroi rigide qui oriente leur trajectoire progressivement vers l'axe de symétrie du lit et/ou le(s) moyen(s) de soutirage mais aussi vers les côtés (direction latérale). La modification d'aire offerte aux particules dans un plan horizontal évolue donc beaucoup plus progressivement ;
. l'orientation des facettes dans des directions en partie latérales (ou transversales) par rapport aux directions radiales permet de diminuer la composante radiale des contraintes exercées sur les particules et laisse donc une importance relative supéneure à la composante verticale. Le lit de particules est donc plus détassé, et possède finalement une meilleure "fluidité" ou "déformabilité", ce qui favorise notablement un écoulement régulier et uniforme des particules ;
. les facettes inclinées par rapport à l'horizontale selon des angles de préférence supérieurs aux angles de glissement des particules contre la paroi diminuent l'importance du volume des zones mortes ou les éliminent même complètement, ce qui diminue les forces de frottement pariétales et facilite encore un écoulement régulier et uniforme des particules à la base du lit ;
. les facettes "médianes" permettent d'atténuer l'angle aigu formé par les facettes latérales au fond des creux et donc diminuent les forces latérales de frottement qui dans ces zones particulières seraient susceptibles de coincer certaines particules en provoquant la formation de ponts ou de voûtes plus ou moins stabilisés.

La surface qui est ainsi au contact des particules en écoulement peut être de préférence lisse, en d'autres termes non perforée, ou bien cette surface peut comporter des ouvertures munies de grille, en nombre limité, pour par exemple l'injection de gaz (en faible quantité) permettant d'aider à l'évacuation des particules.

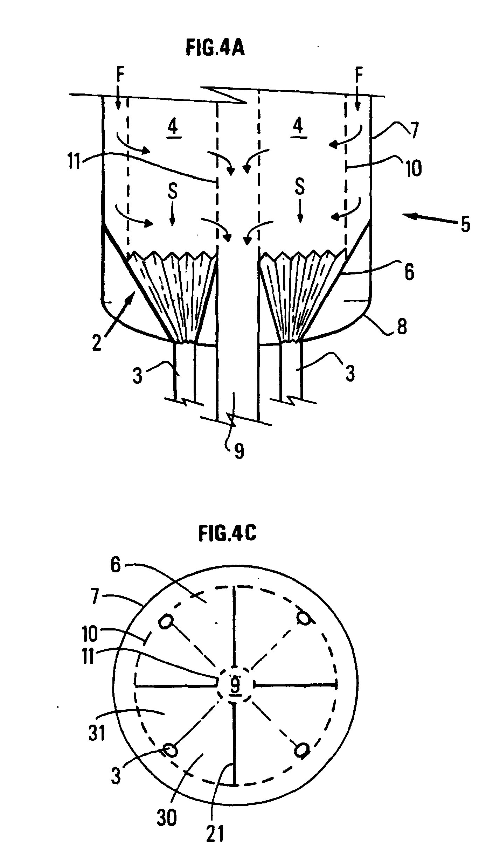

L'invention peut être utilisée dans différentes configurations de l'enceinte. Par exemple, le lit contenu dans l'enceinte peut être mobile (ce cas sera illustré à partir de la figure 4) ou fixe. Dans ce dernier cas, le lit peut reposer sur une paroi (grille) horizontale située au-dessus du fond (2) munie de tubulures comportant chacune un moyen d'obturation amovible, fond plissé qui retrouve alors on intérêt lors de l'écoulement du lit pour le déchargement du lit par le bas (tel que décir dans la demande de brevet EP-A-562913). Le lit fixe peut également reposer sur le fond plissé (2) et il est maintenu grâce à un moyen d'obturation (12) placé sur chaque moyen de soutirage (3) et manoeuvrable de façon à ce qu'il s'éclipse pour permettre l'écoulement du solide. Avantageusement, on emploiera l'un des moyens décrits dans EP-A562913.

Dans une autre configuration, le lit de particules solides est traversé par au moins un fluide. Selon la figure 1, ce fluide s'écoule axialement à travers le lit et est séparé du solide grâce à la paroi (6) perméable au.fluide (grille par exemple), il s'écoule dans l'espace délimité entre la paroi (6) et la paroi (1) prolongée au-delà du fond (2) vers un conduit (9) de collecte du fluide.

Le fluide peut au contraire traverser le lit dans une direction principalement différente de celle de l'écoulement gravitaire de l'ensemble des particules solides.

Une telle disposition se rencontre dans les réacteurs de réformage catalytique dans lesquels le lit mobile des particules catalytiques traverse l'enceinte en écoulement descendant. Un réacteur de ce type est représenté figure 4.

Le réacteur comporte une paroi (7) cylindrique, un fond (15), un toit (16), une grille extérieure (10) cylindrique selon l'axe du réacteur et une grille intérieure (11) cylindrique, concentrique à la grille (10) mais de plus petit diamètre.

Par au moins une ouverture (17) dans le toit sont introduites les particules solides S qui sortent du fond de l'enceinte par au moins une ouverture (18), le lit mobile des particules circulant entre les 2 grilles.

Par au moins une ouverture (19) dans la partie haute du réacteur, est introduit le fluide F qui traverse le lit, est collecté dans le volume interne délimité par la grille (11) et sort du réacteur par au moins une ouverture (20) de la partie basse du réacteur. Le fluide traverse le lit dans un sens principalement différent de l'écoulement de l'ensemble des particules.

Dans cette figure, l' (les) ouverture(s) pour l'introduction et la sortie du fluide est (sont) disposée(s) pour faire circuler le fluide de l'espace annulaire délimité par la paroi de l'enceinte et la grille extérieure de plus grand diamètre vers le volume interne délimité par la grille de plus petit diamètre, d'où il sort. Une circulation du fluide en sens contraire peut aussi convenir.

De façon particulièrement avantageuse, pour améliorer la résistance mécanique du lit, le lit de particules peut être découpé en secteurs par une ou des parois (cloisons) pleines ou des grilles.
Ces parois (cloisons) continues sont fixées aux grilles intérieure et extérieure et au fond, et participent ainsi à la résistance mécanique de l'ensemble. Elles sont disposées parallèlement à l'écoulement du solide et elles ne s'opposent pas à l'écoulement du fluide principal. Par exemple, elles sont agencées radialement dans une enceinte cylindrique.
Il est bien évident que ces parois (cloisons) doivent comporter les caractéristiques de surface nécessaires pour que les particules solides puissent glisser le long de ces parois. Par ailleurs, chaque secteur peut être alimenté indépendamment des autres secteurs, si besoin, et être soutiré (au niveau du solide) indépendamment, il suffit alors de disposer d'au moins un moyen de soutirage (3) dans un secteur.
Ces parois (cloisons) pourront être choisies étanches aux fluides(s) et solides ou encore non perméables au solide mais perméables aux fluide(s).

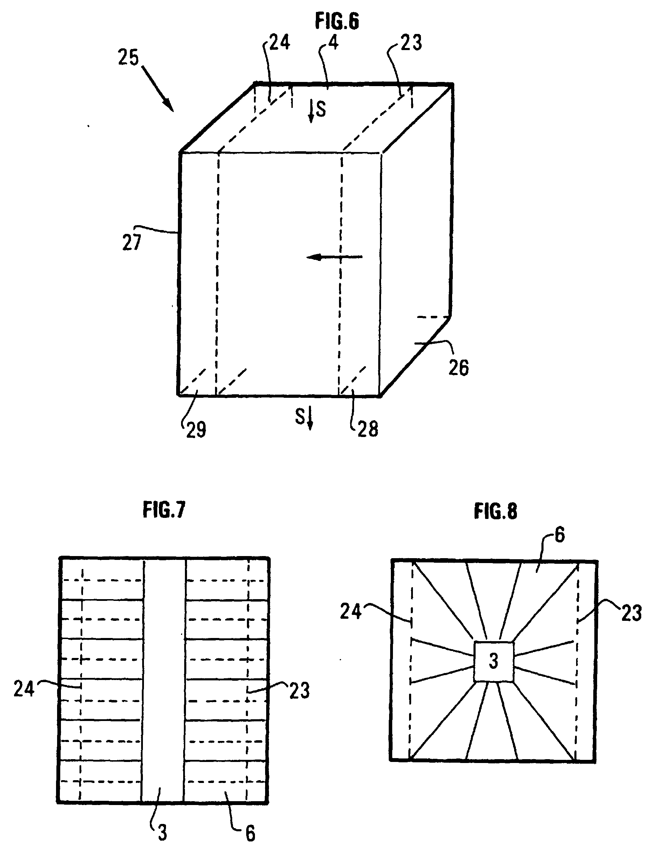

La figure 5 représente sur une vue de dessus incomplète d'un réacteur cylindrique (tel que celui de la figure 4) des cloisons (21).

Cette disposition avantageuse permet également d'améliorer la résistance mécanique du fond "plissé".

Sur les figures 4A et 4B, on a représenté de façon plus détaillée 2 réalisations à lit mobile de particules.

Dans la figure 4A, le(s) fluide(s) circule(nt) de la périphérie du lit (paroi 10 d'entrée du fluide) vers le centre (paroi 11 de sortie du fluide) et le fluide sort de l'enceinte par le collecteur central (9). Le lit repose sur un fond (2) plissé distinct du fond (8) de l'enceinte et les particules s'écoulent dans plusieurs moyens de soutirage (3) qui peuvent ensuite être assemblés pour former un seul conduit d'évacuation du solide.

On notera que cette réalisation pourrait également fonctionner avec un lit fixe maintenu par une grille ou par un moyen d'obturation placé sur les moyens de soutirage, ainsi que cela a été précédemment expliqué.

Sur la figure 4B, on a représenté une enceinte avec circulation inverse du fluide, le fluide entrant dans le lit par exemple au moyen d'un diffuseur (33) disposé pratiquement sur toute la longueur de l'axe du lit, et le fluide sortant par une paroi (1) perméable au fluide est collecté à la périphérie du lit puis sort de l'enceinte par un ou des conduits (9).

La figure 4C est une vue de dessus du fond d'un réacteur dans lesquel le lit est délimité par 2 parois concentriques (10) et (11), un fluide le traverse à partir de l'espace (9) où est introduit le fluide vers la périphérie, il ressort par la grille externe (10) et est collecté entre les parois (7) de l'enceinte et la grille (10). Les moyens de soutirage (3) sont disposés à proximité de la grille (10) et avantageusement selon des distances telles que définies ci-après.

On notera que dans le cas de la figure 4C, la paroi (6) cônique a le sommet de cône dirigé vers le haut, qui débouche dans le conduit (9) et le cône va en s'évasant vers les moyens (3) de soutirage.

Dans toutes les réalisations ici présentées, lorsque le lit est situé dans un volume de section annulaire, il peut être soutiré au moyen de plusieurs (au moins 2) conduits constituant les moyens de soutirage, situés dans le fond du lit et à une distance avantageusement choisie.

En effet, les directions des élévations et creux doivent être inclinées et on a pu constater que l'écoulement est facilité lorsque les moyens (3) de soutirage ne sont pas trop en périphérie de la section du lit. Une distance radiale maximum entre l'axe du moyen de soutirage et la paroi extérieure du lit servant à la sortie du fluide est inférieure ou égale à 0,75 e, e étant la distance radiale entre les deux parois latérales intérieure et extérieure du lit, soit donc la différence entre les rayons respectifs de cesdites parois, une distance préférée est inférieure ou égale à 0,5 e, et même si possible inférieure ou égale à 0,3 e

Sur la figure 3, on a représenté, en vue de dessus du fond, une enceinte dans laquelle le lit de particules solides circule dans un volume de section annulaire délimité par 2 parois (10, 11) cylindriques, concentriques et de même axe. Le fond du lit comporte au moins un moyen (3) de soutirage des particules ; plusieurs moyens sont représentés ici, qui sont disposés à l'aplomb de la section annulaire. La distance entre l'axe de chacun desdits moyens (3) et la paroi de sortie des fluides est d'au plus 0,75 e, e représentant toujours la distance radiale entre les deux parois latérales intérieure et extérieure du lit. Pour les mêmes raisons que précédemment, la distance préférée est d'au plus 0,5 e, et encore plus avantageusement d'au plus 0,3 e.

Dans toutes ces représentations, on a illustré le(s) moyen(s) de soutirage (3) par des conduits, tubes... de section circulaire. Des conduits, tubes... de section elliptique conviennent également tout à fait. D'autres réalisations peuvent être également envisagées sans s'écarter de l'invention, il suffit que la somme des surfaces des sections des moyens de soutirage au niveau du fond du lit soit inférieure à la surface de la section inférieure du lit.

De la même façon également, le lit peut être situé dans le volume de section ellliptique ou quasi elliptique délimité entre 2 parois disposées selon le même axe de symétrie, le fond du lit comporte alors au moins un moyen de soutirage (3) et la distance radiale maximum entre l'axe du moyen de soutirage et la paroi du lit par laquelle sort le fluide est inférieure ou égale à 0,75 e, e étant la distance radiale entre les 2 parois latérales intérieure et extérieure du lit et de préférence au plus 0,5 e et encore plus avantageusement d'au plus 0,3 e.

Sur la figure 6 est représentée une coupe d'un compartiment dit parallélépipédique (25) avec ses parois (26) et (27) comportant 2 grilles planes parallèles (23) et (24) entre lesquelles circule le lit mobile S, selon une direction ici verticale ; le fluide F amené perpendiculairement à S dans l'espace (28) délimité par la paroi (26) et la grille (23) traverse le lit S et est collecté dans l'espace (29) entre la paroi (27) et la grille (24), d'où il sort.

Le lit (4) est situé ainsi dans le volume parallélépipédique délimité par 4 parois. Le fond du lit représenté figure 7 comporte ici un seul moyen de soutirage (3) dont l'axe est situé selon un plan de symétrie du parallélépipède. De façon plus générale, le fond du lit comporte au moins un moyen de soutirage. Dans le cas des grilles parallèles représenté ici, ce (ces) moyen(s) (3) sont situés entre les 2 grilles, au fond du lit. Il (ils) peut (peuvent) même être contre l'une des grilles, le plissage n'existant alors que selon une seule direction.

De la même façon que précédemment, le plissage peut être disposé de façon symétrique, ici selon les 4 parois, ainsi que le montre la figure 8. Le lit peut également être fixe entre les parois (23, 24) et les 4 autres parois perpendiculaires.

L'invention s'applique particulièrement bien au cas des lits de particules solides en mouvement, par exemple avec un mouvement limité dans le temps (cas du soutirage de lits fixes par exemple) et surtout lorsque ce mouvement est permanent (cas des lits mobiles). L'invention peut être applicable plus généralement aux écoulements descendants de particules solides avec réduction de section.
L'invention s'applique particulièrement bien au cas des particules solides de taille moyenne comprise entre 0,1 et 6 mm, et de préférence entre 1,5 et 3,5 mm, voire entre 1,5 et 3,2 mm. Ce sont généralement des particules en forme de billes mais toute autre forme peut convenir en particulier des particules de forme cylindrique ou pseudo cylindrique comme les particules catalytiques extrudées.

L'application s'applique particulièrement bien aux réacteurs catalytiques à lit mobile, notamment ceux de réformage catalytique.

## Revendications

1. Enceinte dans laquelle s'effectue une réaction chimique en présence de catalyseur, ladite enceinte comportant dans son toit au moins une ouverture pour introduire les particules solides de catalyseur, et dans son fond, au moins un moyen (3) de soutirage par gravité desdits particules, et, l'enceinte comportant au moins un lit de particules solides délimité pour son écoulement par au moins une paroi (1, 10, 11) et un fond (2) caractérisé en ce quelle comporte également sur ledit fond (2) au contact des particules une succession d'élévations et de creux formant un plissage, les élévations et creux étant orientés vers le(s) moyen(s) de soutirage dépourvu(s) de moyen d'obturation de façon à permettre, à la base, un écoulement descendant régulier permanent des particules en lit mobile.

2. Enceinte selon la revendication 1, **caractérisée en ce que** la succession d'élévations et de creux résulte d'un assemblage de facettes (30, 31).

3. Enceinte selon la revendication 2, **caractérisée en ce que** les facettes sont de forme carrée, rectangulaire, trapézoïdale, sensiblement trapézoïdale, ou de forme parallélogramme.

4. Enceinte selon l'une des revendications précédentes, **caractérisée en ce que** au moins une facette (32) dite médiane est disposée au niveau d'au moins un creux.

5. Enceinte selon l'une des revendications 1 à 4, **caractérisée en ce que** le lit est situé dans le volume de section circulaire ou elliptique délimité par une paroi (1), et le fond du lit comporte au moins un moyen de soutirage (3).

6. Enceinte selon l'une des revendications 1 à 4, **caractérisée en ce que** le lit est situé dans le volume de section annulaire ou elliptique délimité entre 2 parois (10, 11) disposées selon le même axe de symétrie, et le fond (2) du lit comporte au moins un moyen de soutirage (3).

7. Enceinte selon la revendication 6, **caractérisée en ce que** le (les) moyen(s) de soutirage (3) est situé à une distance radiale entre l'axe dudit moyen de soutirage et la paroi du lit servant à la sortie du fluide inférieure ou égale à 0,75 e, e étant la distance radiale entre les 2 parois.

8. Enceinte selon l'une des revendications 6 ou 7, **caractérisée en ce que** la distance est d'au plus 0,5 e.

9. Enceinte selon l'une des revendications 6 à 8, **caractérisée en ce que** la distance est d'au plus 0,3 e.

10. Enceinte selon l'une des revendications 1 à 4, **caractérisée en ce que** le ht est situé dans le volume parallélépipédique délimité par quatre parois, et qui présente un plan de symétrie, et le fond du lit comporte au moins un moyen de soutirage.

11. Enceinte selon l'une des revendications précédentes, **caractérisée en ce que** le lit repose sur le fond de l'enceinte.

12. Enceinte selon l'une des revendications précédentes, **caractérisée en ce que** le lit est traversé par au moins un fluide dans une direction principalement différente de celle de l'écoulement de l'ensemble des particules.

13. Enceinte selon l'une des revendications précédentes, **caractérisée en ce qu'**il s'agit d'un réacteur de réformage catalytique.

14. Enceinte selon l'une des revendications précédentes, **caractérisée en ce qu'**elle comporte au moins une cloison découpant le lit de particules en secteurs.

15. Enceinte selon l'une des revendications précédentes, **caractérisée en ce que** les particules catalytiques présentent des tailles moyennes compnses entre 0,1 et 6 mm.

16. Enceinte selon l'une des revendications précédentes, **caractérisée en ce que** les particules catalytiques présentent des tailles moyennes comprises entre 1,5 et 3,5 mm.

17. Enceinte selon l'une des revendications précédentes, **caractérisée en ce que** :
- le lit mobile de particules catalytiques s'écoule dans le volume de section annulaire ou elliptique délimité entre une paroi extérieure (10) et une paroi intérieure (11) perméables, disposées selon le même axe de symétrie,
- elle comporte dans sa partie haute au moins une ouverture (19) pour l'introduction d'au moins un fluide dans l'espace délimité entre la paroi (1) de l'enceinte et la paroi (10), ledit fluide entrant dans le lit par la paroi (10), en sortant par la paroi (11) et traversant le lit dans une direction principalement différente de celle de l'écoulement de l'ensemble des particules.

## Claims

1. A vessel in which a chemical reaction is carried out in the presence of a catalyst said vessel comprising in its roof at least one aperture for introducing solid particles of catalyst, and in its base at least one gravity extraction means (3) for said particles, and said vessel comprising at least one bed of solid catalytic particles with its flow delimited by at least one wall (1, 10, 11) and a base (2), **characterized in that** said vessel also comprises on said base (2), in contact with the particles, a succession of ridges and hollows forming pleats, the ridges and hollows being orientated towards the extraction mean(s) devoided of obstruction mean so as to allow , at the base, a permanent regular downflow of moving bed particles.

2. A vessel according to claim 1, **characterized in that** the succession of elevations and hollows is formed by an assembly of facets (30, 31).

3. A vessel according to claim 2, **characterized in that** the facets are square, rectangular, trapezoidal or substantially trapezoidal in shape, or shaped as a parallelogram.

4. A vessel according to any one of the preceding claims, **characterized in that** at least one facet (32) termed the median facet is located in at least one hollow.

5. A vessel according to any one of claims 1 to 4, **characterized in that** the bed is located in the volume with a annular or elliptical cross section delimited by wall (1), and the base of the bed comprises at least one extraction means (3).

6. A vessel according to any one of claims 1 to 4, **characterized in that** the bed is located in the volume with an annular or elliptical cross section delimited between two walls (10, 11) arranged on the same axis of symmetry, and the base (2) of the bed comprises at least one extraction means (3).

7. A vessel according to claim 6, **characterized in that** the extraction means (3) is located at a radial distance between the axis of said extraction means and the wall of the bed which acts as a fluid outlet which is less than or equal to 0.75e, e being the radial distance between the two walls.

8. A vessel according to claim 6 or claim 7, **characterized in that** the distance is at most 0.5e.

9. A vessel according to any one of claims 6 to 8, **characterized in that** the distance is at most 0.3e.

10. A vessel according to any one of claims 1 to 4, **characterized in that** the bed is located in the parallelepipedal volume delimited by four walls, and which has a plane of symmetry, and **in that** the base of the bed comprises at least one extraction means.

11. A vessel according to any one of the preceding claims, **characterized in that** the bed rests on the base of the vessel.

12. A vessel according to any one of the preceding claims, **characterized in that** the bed is traversed by at least one fluid in a principal direction which is different to that of the overall flow of the particles.

13. A vessel according to any one of the preceding claims, **characterized in that** the vessel is a catalytic reforming reactor.

14. A vessel according to any one of the preceding claims, **characterized in that** it comprises at least one partition dividing the particle bed into sectors.

15. A vessel according to any one of the preceding claims, **characterized in that** the average size of the catalytic particles is in the range 0.1 to 6 mm.

16. A vessel according to any one of the preceding claims, **characterized in that** the average size of the catalytic particles is in the range 1.5 to 3.5 mm.

17. A vessel according to any one of the preceding claims, **characterized in that** :
- the moving bed of catalytic particles flows in the volume with an annular or elliptical cross section delimited by outer screen (10) and imer screen (11 ) which are permeable and placed on the same axis of symmetry,
- it comprises in its upper portion at least one aperture (19) for introducing at least a fluid in the space determined by vessel wall (1) and wall (10), said fluid entering in the bed by wall (10), issuing from the bed by wall (11 ) and flowing through the bed in a direction sensibly different from direction of the flow the totality of particles.

## Patentansprüche

1. Behälter, in dem eine chemische Reaktion in Anwesenheit eines Katalysators abläuft, wobei dieser Behälter in seinem Dach über wenigstens eine Öffnung zum Einführen der festen Katalysatorpartikel und in seinem Boden über wenigstens ein Mittel verfügt, um infolge Schwerkraft diese Partikel abzuziehen und der Behälter über wenigstens ein Bett von Feststoffpartikeln verfügt, das für sein Strömungsverhalten durch wenigstens eine Wand (1, 10, 11) und einen Boden (12) begrenzt ist, **dadurch gekennzeichnet, dass** er ebenfalls auf diesem Boden (2) in Kontakt mit den Partikeln über eine Aufeinanderfolge von Erhebungen und Ausbuchtungen, eine Faltung bildend, verfügt, wobei die Erhebungen und Ausbuchtungen bzw. Vertiefungen gegen das oder die Abzugsmittel gerichtet sind, die frei von jedem Verschlussmittel sind, derart, dass an der Basis eine regelmäßige permanente absteigende Strömung der Partikel im beweglichen Bett ermöglicht wird.

2. Behälter nach Anspruch 1, **dadurch gekennzeichnet, dass** die Aufeinanderfolge von Erhebungen und Ausbuchtungen aus einem Zusammenfügen von Facetten bzw. Fasenflächen (30, 31 ) resultiert.

3. Behälter nach Anspruch 2, **dadurch gekennzeichnet, dass** die Facetten von quadratischer, rechtwinkeliger, trapezförmiger, im Wesentlichen trapezförmiger oder parallelogrammförmiger Gestalt sind.

4. Behälter nach einem der vorhergehenden Ansprüche, **dadurch gekennzeichnet, dass** wenigstens eine Facette (32), die sog. Mittelfacette, in Höhe wenigstens einer Ausbuchtung oder Vertiefung angeordnet ist.

5. Behälter nach einem der Ansprüche 1 bis 4, **dadurch gekennzeichnet, dass** das Bett im Volumen kreisförmigen oder elliptischen durch eine Wandung (1 ) begrenzten Querschnitts angeordnet ist und der Boden des Bettes über wenigstens ein Abzugsmittel (3) verfügt.

6. Behälter nach einem der Ansprüche 1 bis 4, **dadurch gekennzeichnet, dass** das Bett im Volumen ringförmigen oder elliptischen zwischen zwei gemäß der gleichen Symmetrieachse angeordneten Wandungen (10, 11) begrenzten Querschnitts angeordnet ist und der Boden (2) des Bettes über wenigstens ein Abzugsmittel (3) verfügt.

7. Behälter nach Anspruch 6, **dadurch gekennzeichnet, dass** das oder die Abzugsmittel (3) unter einem radialen Abstand zwischen der Achse dieses Abzugsmittels und der Wandung des Betts angeordnet ist, die zum unteren Austritt des Fluids dient oder gleich 0,75 e ist, wobei e der Radialabstand zwischen den beiden Wandungen ist.

8. Behälter nach einem der Ansprüche 6 oder 7, **dadurch gekennzeichnet, dass** der Abstand höchstens 0,5 e ausmacht.

9. Behälter nach einem der Ansprüche 6 bis 8, **dadurch gekennzeichnet, dass** der Abstand höchstens gleich 0,3 e ist.

10. Behälter nach einem der Ansprüche 1 bis 4, **dadurch gekennzeichnet, dass** sich das Bett im parallelepipedförmigen, durch vier Wandungen begrenzten eine Symmetrieebene bildenden Volumen befindet und der Boden des Bettes über wenigstens ein Abzugsmittel verfügt.

11. Behälter nach einem der vorhergehenden Ansprüche, **dadurch gekennzeichnet, dass** das Bett auf dem Boden des Behälters ruht.

12. Behälter nach einem der vorhergehenden Ansprüche, **dadurch gekennzeichnet, dass** das Bett von wenigstens einem Fluid in einer Richtung durchquert wird, die hauptsächlich unterschiedlich zu der der Strömung der Gesamtheit der Partikel ist.

13. Behälter nach einem der vorhergehenden Ansprüche, **dadurch gekennzeichnet, dass** es sich um einen katalytischen Reformierungsreaktor handelt.

14. Behälter nach einem der vorhergehenden Ansprüche, **dadurch gekennzeichnet, dass** er über wenigstens eine Trennwand verfügt, die das Partikelbett in Sektoren unterteilt.

15. Behälter nach einem der vorhergehenden Ansprüche, **dadurch gekennzeichnet, dass** die katalytischen Partikel mittlere Abmessungen zwischen 0,1 und 6 mm aufweisen.

16. Behälter nach einem der vorhergehenden Ansprüche, **dadurch gekennzeichnet, dass** die katalytischen Partikel mittlere Abmessungen zwischen 1,5 und 3,5 mm aufweisen.

17. Behälter nach einem der vorhergehenden Ansprüche, **dadurch gekennzeichnet, dass**:
a. das bewegliche Bett aus katalytischen Partikeln im Volumen ringförmigen oder elliptischen Querschnitts fließt, dass zwischen einer Außenwandung (10) und einer Innenwandung (11), beide permeabel, begrenzt ist, die gemäß der gleichen Symmetrieachse angeordnet sind und
b. er in seinem oberen Teil über wenigstens eine Öffnung (19) zum Einführen wenigstens eines Fluids in den Raum verfügt, der zwischen der Wandung (1 ) des Behälters und der Wandung (10) begrenzt ist, wobei das Fluid in das Bett über die Wandung (10) eintritt und über die Wandung (11 ) austritt und dabei das Bett in eine Richtung durchquert, die hauptsächlich unterschiedlich zu der der Strömungsrichtung der Gesamtheit der Partikel ist.
